# EUROPEAN PATENT SPECIFICATION

(11) **EP 2 579 422 B1**
(45) Date of publication and mention of the grant of the patent: **09.01.2019**
(21) Application number: 12199542.7
(22) Date of filing: 20.02.2004
(51) Int. Cl.: H02J 7/00, G06F 1/26

(54) **Circuit and method of operation for an electrical power supply**
Schaltung und Verfahren zum Betrieb für eine elektrische Stromversorgung
Circuit et procédé de fonctionnement d'une alimentation électrique

(30) Priority: 21.02.2003 US 372180; 21.02.2003 CA 2419488
(43) Date of publication of application: 10.04.2013
(62) Divisional of application: 04712979.6
(73) Proprietor: Fundamental Innovation Systems International LLC, Flower Mound, TX 75022 (US)
(72) Inventor: Veselic, Dusan, Oakville, Ontario L6M 3P6 (CA); Guthrie, Martin G.A., Ext. 72818, Ontario N2L 3W8 (CA)
(74) Representative: Vossius & Partner Patentanwälte Rechtsanwälte mbB

(56) References cited:
- WO-A1-01/20433
- US-A- 5 789 904
- US-A1- 2001 003 205
- US-B1- 6 252 375

## Description

### TECHNICAL FIELD

This invention relates in general to battery chargers, and more specifically to a method and apparatus for charging a battery in a portable communication device from a variety of power sources, including limited capacity sources such as an integral power node of a computer data bus. One such computer data bus would be a USB (universal serial bus) port.

### BACKGROUND ART

With the current computing and information revolution, portable electronic devices such as cellular telephones, personal digital assistants (PDAs), digital pagers and wireless email devices, are becoming very common. These portable devices are typically powered by internal batteries which must be recharged periodically by an external power source, using a battery charger. Battery chargers generally receive power from a standard AC electrical outlet and convert the AC power into a low DC voltage for recharging a battery.

The battery chargers of these portable devices also generally employ a "battery charge controller" to manage the charging of the battery. Such battery charge controllers offer functionality such as:
∘ regulating the voltage and current levels to the rechargeable battery;
∘ providing status signals to the main processor of the portable device, or operating one or more status LEDs (light emitting diodes);

- providing protection circuits such as overcurrent, undervoltage, reverse polarity and overtemperature protection; and
- shutting themselves off when the charging source has been removed, to minimize battery drain.

Lithium ion battery packs, for example, must be charged according to a relatively strict algorithm so that they can be fully charged, be charged and re-charged many times, and be safely operated. This charging algorithm generally proceeds as follows:
1. at the first stage, any severe undervoltage or deep discharge conditions are addressed. During this pre-charging stage, the battery voltage is gently brought up from a very low or dead state, usually at a rate of 1/10 of the regular charge current;
2. next, the battery is charged at a constant current level, until the voltage across the battery reaches its design level (say, 4.2 VDC). At this point the battery will only be at 40 to 70% of full capacity; and then
3. charging of the battery continues at a constant voltage level (again, say 4.2 VDC) until it is fully charged. In this mode, the current drawn by the battery will drop over time. When the charge current has dropped to 10% of the initial charge rate, or some other limit determined by the battery manufacturer, charging is stopped.

Charging must stop at this point because trickle charging is not acceptable for lithium batteries; an overcharge will damage the cells, possibly plating out lithium metal and becoming hazardous.

Hence, lithium batteries are almost invariably used with battery charge controllers designed to their particular charging parameters.

Unfortunately, most battery charge controllers are designed to draw from a high capacity power supply with a steady voltage that will not sag appreciably under its current demands. This is a problem when one attempts to use a power supply with limited capacity. Some computer data buses such as USB (universal serial bus) buses can be used to provide power to external devices, but while such power supplies are very convenient, they have limited capacity.

The majority of personal computers (PCs) and laptop computers available today, are provided with one or more USB ports as standard components. USB ports are designed to support data communication at speeds of 12 megabits and 1.5 megabits per second, support PnP (Plug and Play) installation software, and support hot plugging (i.e. devices can be connected and disconnected while the PC is running). Thus, USB ports are often used as interfaces to connect keyboards, mouses, game controllers, printers and scanners to PCs.

As well, USB ports are operable to supply limited power to connected external devices. The standard USB specification requires that "high-power" USB ports be operable to provide a supply voltage of 4.75 - 5.25 VDC and a supply current of at least 500mA (often referred to as "five units"). The specification for "low-power" USB ports requires a supply voltage of 4.40 - 5.25 VDC and current of 100 mA (referred to as "one unit").

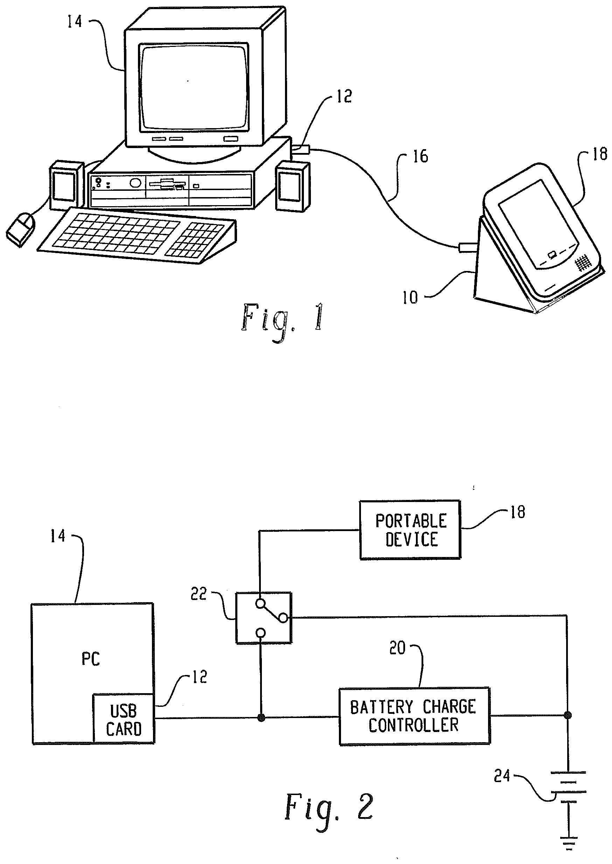

USB ports would seem to be a very logical choice as a power supply for portable devices for a number of reasons. To being with, USB ports supply a low DC voltage supply which is often very close to, or just above, the voltage of the battery being charged (many portable devices having battery voltages in the range of 2.5 - 4.5 VDC). As well, many portable devices may be operable to upload and download data or software, to and from a personal computer or a laptop computer (often referred to as "syncing"). Thus, many portable devices are supplied with docking cradles as shown in the system diagram of **Figure 1****.** This is quite a straightforward system, as the docking cradle **10** is connected to a USB port **12** of a personal computer (PC) **14,** via a simple USB cable and connectors **16.** The portable device **18** need only be set down in the docking cradle **10** and an electronic connection to the PC **14,** is made.

If the USB port **12** has sufficient power, it makes much more sense to use the USB port **12** to supply charging power to the portable device **18,** rather than using a separate AC charger. For example:
1. a USB power supply will have less electrical noise than an AC charger, unless the AC charger incorporates large DC capacitors or inductors;
2. an AC charger requires either a heavy transformer or an expensive switching power supply, neither of which would be required if USB power is used;
3. in the USB power supply implementation, the cable and connectors **16** used to connect the docking cradle **10** to the PC **14** could be used to carry both power and data, so no extra physical components would be required at all. In contrast, an AC power supply would have to be provided as a separate physical component from a USB data cable; and
4. there are no universal standards for AC power supplies; a given AC power supply may require 120VAC or 240VAC as an input, and may provide 3, 4.5, 6, 7.5 or 9 VDC out, with one of large number of different possible connectors and polarities. A traveller who forgets his AC power supply at home, may not be able to find a suitable replacement.

In contrast, the USB standard is widely accepted, so that a traveller whose mobile device is equipped with a USB connector will have a much greater chance of finding a charging source.

Thus, it would clearly be desirable to use USB power to charge portable devices. Unfortunately though, as noted above, USB ports can only provide limited power. The problem becomes clear when considering the block diagram of **Figure 2****.** In this scenario, the portable device **18** and the battery charge controller **20** are connected to the USB port **12** in parallel, as under charging conditions the control switch **22** will be toggled so that the portable device **18** draws power from the USB port **12.** When the battery **24** has become fully charged by the battery charge controller **20** and the USB port **12** power removed, the control switch **22** is then toggled so that the portable device **18** draws power from the battery **24.** This type of circuit may work in some circumstances, but it is not acceptable where the power source has limited capacity:

If one attempts to power the portable device **18** and battery charge controller **20** simultaneously from the USB card **12,** it is quite likely that too great a load would be placed on the USB card **12.** The excessive load on the USB card **12** may result in an undervoltage or low current condition that could result in a number of undesirable problems such as: the battery **24** not becoming properly charged or becoming permanently damaged, or the portable device **18** operating erratically or becoming damaged.

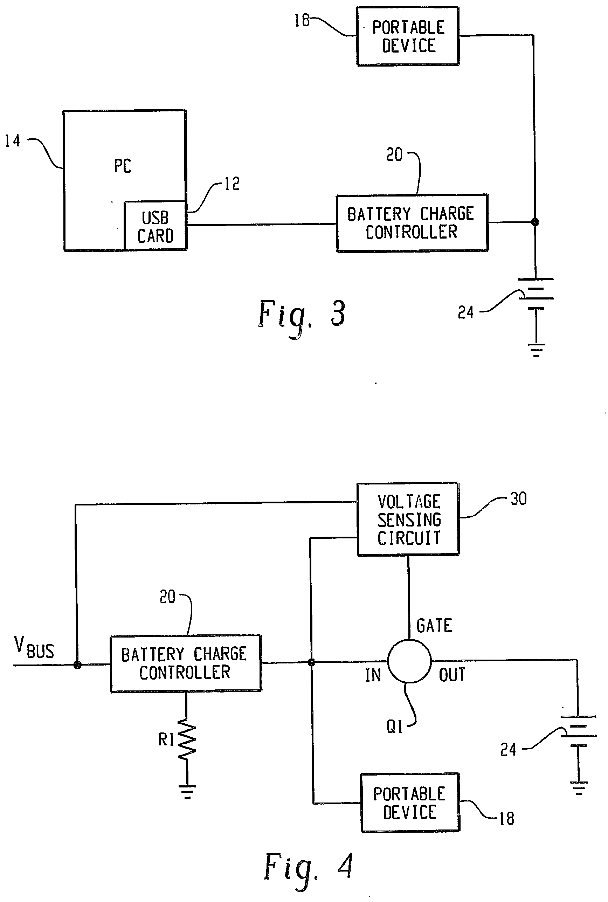

As an alternative, the battery **24** and portable device **18** could be arranged as shown in **Figure 3** so that they are both fed by the battery charge controller **20.** While such a design would reduce the total power drawn by the portable device **18** and battery **24** in combination, there are a number of other problems:
1. most importantly, there is still no control over the total power that is drawn from the USB port **12;**
2. the power drawn by the portable device **18** could disturb the carefully designed protection and charging mechanisms of the battery charge controller **26;**
3. the portable device **18** and battery **24** compete arbitrarily for the available power, so they may adversely affect the operation of one another. If the available voltage drops too low, or insufficient current is available, either device may operate erratically, or fail all together;
4. if the battery **24** is in a deep-discharge state when power is turned on, the voltage to the portable device **18** will be dragged down to the level of the deep-discharged battery. Typically, portable devices **18** will not be operable at such a low voltage level; and
5. the current that mus,t be supplied to the battery **24** and the portable device **18** must be dissipated by the battery charge controller **20** or an external semiconductor in some way. The more power that is dissipated, the larger the battery charge controller **20** (or the external semiconductor driven by the battery charge controller **20**) must be. Generally, a semiconductor's ability to dissipate power varies with its surface area, thus, if the power dissipation is doubled, the semiconductor must increase by four times the surface area.

New, dedicated battery charge controllers could be developed which are designed to operate with a USB power supply and a portable device **18,** but that would be an expensive and complicated solution. Each battery charge controller would have to be designed to suit a particular pairing of a portable device **18** and battery **24** because it would have to take the power consumption requirements of both components into account.

There is therefore a need for a method and apparatus which allows standard computer data busses such as USB ports to simultaneously power portable devices 18 and their associated battery charge circuits 20 without having to design new battery charge controllers with very specific applications. This design must be provided with consideration for the tight operating parameters of battery charging circuits, the limited physical board area in portable devices, and the reliability and complexity of the design.

US 6252375 discloses a power management system and current augmentation and battery charger method and apparatus for a computer peripheral. The current augmentation method is for use with a computer powered peripheral subsystem including a dynamic load, the dynamic load requiring greater power, from time to time, than the specified power available from the computer and specified interconnect bus or interface. This method includes use of a power node supplying power as necessary from the battery to the dynamic load, such that the varying dynamic load does not exceed the specified power available from the computer and interconnect bus. The method includes monitoring the load current, and injecting current into the power node to augment the current drive capability of the computer and peripheral bus. Preferably, the injecting is performed selectively based upon the result of the monitoring, e.g. only when the sensed load current is approaching a defined threshold level. Further, battery charging is performed only when it is determined that no current is being drawn through the battery to avoid distorting the voltage reading. The apparatus is also for selectively charging the battery from the current on the bus during relatively idle periods of peripheral dynamic load. The apparatus includes means for determining the chargeability of the battery in accordance with predefined chargeability criteria, and a battery charging circuit responsive to the determining means for selectively charging the battery only during times when the peripheral load current is limited and there is sufficient current available on the bus from the computer to recharge the battery.

### DISCLOSURE OF THE INVENTION

It is therefore an object of the invention to provide a novel method and apparatus which allows standard battery charge controllers to be supplied from standard computer data ports and other power sources, which obviates or mitigates at least one of the disadvantages of the prior art. The invention refers to a portable electronic device according to claim 1 and to a method of controlling a USB power supply according to claim 12.

### BRIEF DESCRIPTION OF THE DRAWINGS

These and other features of the invention will become more apparent from the following description in which reference is made to the appended drawings in which:
**Figure 1** presents a physical layout of a personal computer connected to a portable electronic device in a manner known in the art;
**Figure 2** presents an electrical block diagram of a battery charging circuit and portable device being powered in parallel;
**Figure 3** presents an electrical block diagram of a battery and portable device both being powered by a battery charge controller;
**Figure 4** presents an electrical schematic diagram of a battery charging circuit in a broad embodiment of the invention;
**Figure 5** presents a timing diagram of voltage, current and power curves for the charging of a lithium ion battery in an embodiment of the invention;
**Figure 6** presents an electrical schematic diagram of a battery charging circuit in a simple embodiment of the invention;
**Figures 7A****,** **7B** and **7C** present an electrical schematic diagram of a battery charging circuit in a comprehensive embodiment of the invention;
**Figure 8** presents a flow chart of a method of operating a battery charging circuit in an embodiment of the invention.

### BEST MODE FOR CARRYING OUT THE INVENTION

As explained above, there is currently no effective design which is capable of powering both a portable device **18** and a rechargeable battery **24** from a power supply with limited capacity.

A circuit which overcomes a number of the problems in the art, is presented as a block diagram in **Figure 4****.** This figure presents a battery charging circuit build around a standard battery charge controller **20.** In this embodiment of the invention, the battery charge controller **20** receives power from an external source (V_{BUS}) and feeds a portable device **18** and rechargeable battery or batteries **24** in parallel, but the feed to the battery **24** is made via a semiconductor switch **Q1.** Control of the current flow through the semiconductor switch **Q1** is modulated by a voltage sensing circuit **30** which measures the voltage drop across the battery charge controller **20** and reduces the current flow through the semiconductor switch **Q1** to the battery **24** when the voltage drop is too great.

The voltage sensing circuit **30** allows the total power consumption of the circuit to be inferred because the current output of the battery charge controller **20** is controllable, and power is the product of voltage drop and current. Most battery charge controllers **20** known in the art are provided with some sort of maximum current control. In the exemplary embodiments described hereinafter, for example, the maximum current output of battery charge controller **20** is simply set via an external resistor **R1,** though of course, the current output could also be controlled in many other ways (for example, being programmable, application specific, or set via some form of analogue or digital input signal).

Also in the embodiments described hereinafter, the voltage sensing circuit **30** itself is provided via an operational amplifier (op amp). Thus, the voltage drop across the battery charge controller **20** could simply be measured by comparing the voltage at the input and output of the battery charge controller **20,** as shown in **Figure 4****.** Alternatively, one input to the op amp could be taken from the output of the battery charge controller **20,** while the other could be some reference voltage V_{REF}; either emulating the V_{BUS} input to the battery charge controller **20,** or being scaled in some manner.

Thus, by monitoring the voltage drop across the battery charge controller **20** and knowing the maximum current that it may provide, the total power is known. Using this information to modulate the power to the battery **24,** the total power dissipated by the battery charge controller **20** may be controlled.

Also, because this circuit modulates the power available to the battery **24,** this circuit can be designed to ensure that the portable device **18** receives the power it requires for operation, while the rechargeable battery **24** only receives power when surplus capacity is available.

The total power consumed may therefore be modulated to stay within the limits of the power available from the USB port **12,** and within the range of power that the battery charge controller **20** is able to dissipate. - This allows battery charge controllers **20** to be used "off the shelf", rather than having to design new and larger battery charge controllers **20** which can dissipate enough power to supply both the portable device **18** and battery **24.** It also allows the battery charge controller **20** or external driving element to be kept physically small.

With this power modulation mechanism, there is no longer power competition between the portable device **18** and the battery **24.** The battery **24** receives power only if there is more power available than the portable device **18** requires. This may seem inconsistent with the charging requirements of batteries such as lithium cells, but the parameters of the circuit may easily be designed to accommodate them.

As noted above, battery charge controllers are usually designed to suit a particular battery or family of batteries. For example, lithium batteries are charged in three phases:
1. resolving deep discharge conditions;
2. constant current charging until the battery reaches a certain voltage level; and then
3. constant voltage charging until the charging current drops to a certain point.

During the initial handling of deep discharge conditions, comparatively little current is provided to the battery (typically 1/10 of the charge current). The circuit of the invention is therefore designed so that the battery will rarely be denied this very modest power demand.

The constant current charging phase draws the greatest amount of power, but lithium cells do not suffer if the charging current is modulated or cycled during this phase. Thus, it is this phase that is altered the greatest by the circuit of the invention. If the portable device **18** is used a great deal during this phase, the only negative impact will be that the charging of the battery **24** takes much longer.

During the constant voltage charging phase, the maximum current is less than that of the constant current phase and drops continuously as the battery **24** becomes fully charged. More important, the battery **24** voltage stays at a constant, and maximum, level during this phase, so the total power dissipated by the battery charge controller **20** will be lower during the constant voltage phase, than it was during the constant current phase.

As will be described in greater detail hereinafter, the voltage sensing circuit **30** is designed to saturate the semiconductor switch **Q1** when the full charge voltage level is reached (i.e. the semiconductor switch **Q1** does not restrict current flow at all at this point).

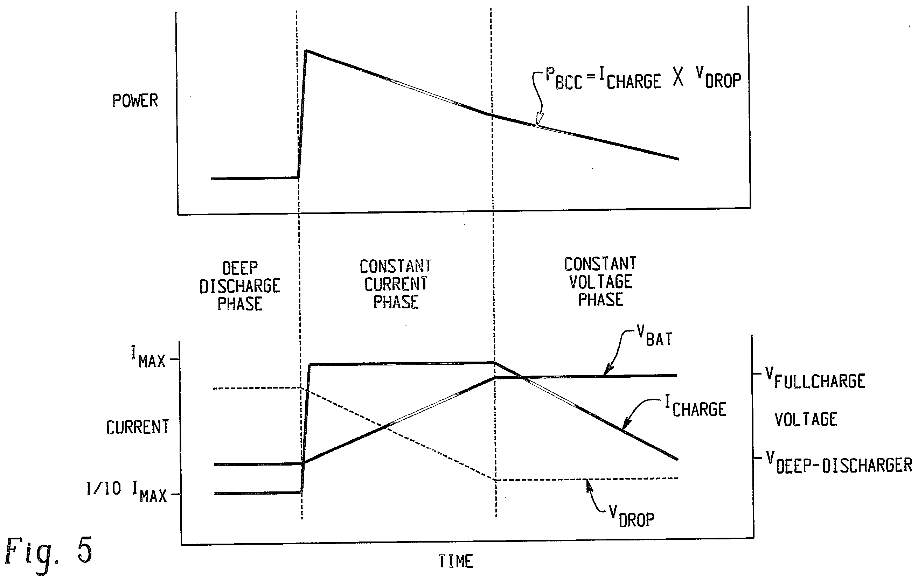

The change in power dissipation over time is shown in **Figure 5****.** Four curves are shown in this figure: the voltage of the battery **24,** labelled V_{BAT}, the charge current, labelled I_{CHARGE}, the voltage drop across the battery charge controller **20,** labelled V_{DROP}, and the total power dissipated, labelled PBCC. Note that V_{DROP} varies inversely with V_{BAT}, and that the power dissipated by the battery charge controller **20,** is the product of I_{CHARGE} and V_{DROP}.

Clearly, during the conditioning phase, the battery voltage V_{BAT} is low, so V_{DROP} will be high. However, I_{CHARGE} is also low during this phase (about 1/10 of I_{MAXCHARGE}, the maximum charging current) so the total power dissipated is modest.

During the constant current phase, the charge current rises to I_{MAXCHARGE}, but the voltage of the battery, V_{BAT}, drops as the battery becomes charged, so the power dissipated by the battery charge controller **20** drops over the course of this phase.

As the constant voltage phase begins, the battery voltage has reached its fully charged level, V_{FULLCHARGE}, so V_{DROP} is at a minimum. As I_{CHARGE} drops over the course of this phase, the power dissipated also continues to drop (noting again, that the power dissipated is the product of I_{CHARGE} and V_{DROP}).

Clearly then, the greatest power level is drawn during the constant current phase. As noted above, the charging of the battery **24** can be safely cycled during this phase, so the restriction in current to the battery **24** during this phase, is allowable.

This circuit also allows the user to boot his portable device **18** very quickly because it isolates the battery **24** from the portable device **18.** If the battery **24** and portable device **18** were connected when the battery charge controller **20** attempted to condition a deep discharged battery **24,** the voltage at the portable device **18** would be drawn down to the level of the deep-discharged battery **24.** Typically, this would be too low for proper operation of the portable device **18.** With the circuit of the invention, the battery **24** and portable device **18** are isolated by **Q1.** Even if the battery **24** is in a deep-discharge state, the portable device **18** will still see a voltage that is high enough for proper operation.

The time for the portable device **18** to boot up is therefore only limited by the enabling time of the battery charge controller **20** itself. A typical figure for this ramp-up is 1mS - 4mS, though it could vary from one battery charge controller **201** to another.

Thus, the use of the circuit in **Figure 4** allows computer data busses and similar power supplies with limited capacity, to supply power to portable devices and discharged batteries simultaneously.

A number of different embodiments of the invention will now be described. Each embodiment uses a very small number of simple, reliable components. Thus, as a whole, the invention provides an effective solution which is inexpensive, reliable and consumes minimal board space in a portable device.

### Basic Implementation

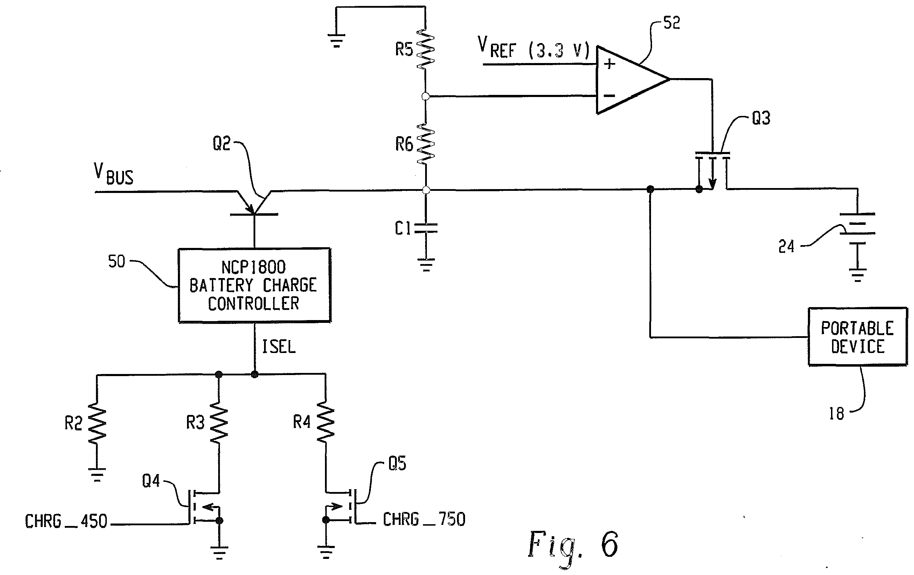

**Figure 6** presents an electrical schematic diagram of a charging circuit which employs four main components: an NCP1800 battery charge controller **50,** a semiconductor **Q2,** which serves as external driving element for the battery charge controller **50,** an operational amplifier (opamp) **52,** and a MOSFET (metal oxide silicon field effect transistor) **Q3,** which controls the current to the rechargeable battery **24.**

The NCP1800 battery charge controller **50** is a standard, single-cell, Lithium ion battery charge controller as known in the art. The maximum current that this device will provide is regulated by the resistance between pin ISEL and ground. In this case, three resistors **R2, R3** and **R4** are used to set the maximum current levels for different operating conditions. The default condition is that only 100mA is available (low-power USB), which establishes the value for resistor **R2.** If it is detected that the device is plugged into a high-powered USB source, then the gate of MOSFET Q4 will be energized, and the resistance between ISEL and ground will be set by the resistance of **R2** and **R3** in parallel.

Similarly, if it is detected that the source of power for the circuit has even more power available (an AC plug-in or car adapter, for example), then MOSFET **Q5** will be energized so that the resistance between ISEL and ground will be set by the resistance of **R2** and **R4** in parallel. The circuit of **Figure 6** will typically be included in the portable device **18** itself, or in a docking cradle **10,** thus it should also be operable with such larger capacity power supplies.

Application notes from the manufacturer of the NCP1800 battery charge controller **50** are available which will assist the designer in establishing the specific parameters and values for resistors **R2, R3** and **R4** and the driving transistor **Q2.**

The voltage sensing portion of this circuit is provided by op amp **52,** along with resistors **R5** and **R6,** and capacitor **C1.** This circuit monitors the voltage on the collector side of **Q2** (via voltage divider **R5** and **R6**), and compares it to a reference level (in this case, V_{REF} = +3.3V). If the voltage on the collector side of **Q2** drops, then the voltage drop across **Q2** rises and the power it must dissipate rises. To reduce the power that must be dissipated, the op amp **52** restricts the current through **Q3** increasing its drain source resistance.

Note that V_{REF} may simply be provided from V_{BUS} and a voltage regulator. V_{REF} is used as an input to the op amp **52** rather than V_{BUS} because the regulator will provide a constant output voltage, whereas V_{BUS} has a wide range making the design more difficult. The values of resistors **R5** and **R6** are established simply by the need to scale the V_{BUS} value to the V_{REF} value.

Also, note that capacitor **C1** is included in the circuit to smooth out fluctuations and to prevent oscillation.

As described above, this circuit allows the portable device **18** to draw power via **Q2,** without causing the combined draws of the portable device **18** and the battery **24** to exceed the power capacity of **Q2.** As the portable device **18** draws power, the voltage on the collector side of **Q2** drops and the current via **Q3** is throttled in a linear mode.

Power dissipation must be designed for the worst-case scenario. For example, if the maximum design parameters are as follows:
- up to 0.85A is available;
- an input voltage could be as high as 6V; and
- pre-charging of the battery **24** is complete at 3.0V (that is where the highest charge current is delivered to battery, as shown in **Figure 5**);
then (6V - 3V) * 0.85A = 2.55W of power that would be dissipated by the external drive element **Q2** (note that in circuits which do not use such an element, all of this power would be dissipated by the battery charge controller **50**).

This external drive element **Q2** must dissipate heat generated by the current that flows through it. The more power that is dissipated, the larger physical size this pass element must be; generally, the surface area that a device requires, rises with the square of the power to be dissipated. That is, if the power is doubled, a transistor with four times the surface area is required. The sizes of transistors are standardized, so the preferred embodiment of this circuit is designed to employ SOT-23 (or superSOT-6) packages, which are capable of dissipating up to 1.6W. The next size is SOT-223, which is considerably larger with twice the power dissipation.

As noted above, throttling of power to the battery **24** is done so that the current always satisfies the needs of the portable device **18** and any current left over (difference between the input current and the current to the portable device **18**) is delivered to the battery **24.** For example, suppose that the circuit is connected to a high power USB port (500mA is available) and a portable device **18** such as portable Blackberry™ handheld device. When the Blackberry goes to sleep, it may only require 0.3mA - 0.7mA so the balance of the available current (499.3mA - 499.7mA) may be provided to battery **24.** Once the Blackberry wakes-up, which it does periodically to perform house keeping jobs, it draws say 30mA - 70mA, depending on what it does. At this point, the battery **24** receives 430mA - 470mA. The analysis occurs when the Blackberry is to receive or transmit some data, or perform some other task. In each case, the power to the battery **24** is dynamically auto-adjusted.

When limited power is available, it is also desirable to cut off high-power consuming components, preserving power only for the processor. This is easily done by connecting only the processor and memory of the portable device **18,** to **Q2** as shown in **Figure 6****,** and connecting other high power consumers to the battery side of **Q3.** As a result, if we are operating with a limited current source (such as low-powered USB of 100mA) and an excessive current component such as a vibrator (typically 120mA) or a back-light (typically 150mA) is turned on, the voltage output from **Q2** would start to drop, causing **Q3** to increase its Rds resistance and preserve the current needed by the processor.

### Comprehensive Implementation

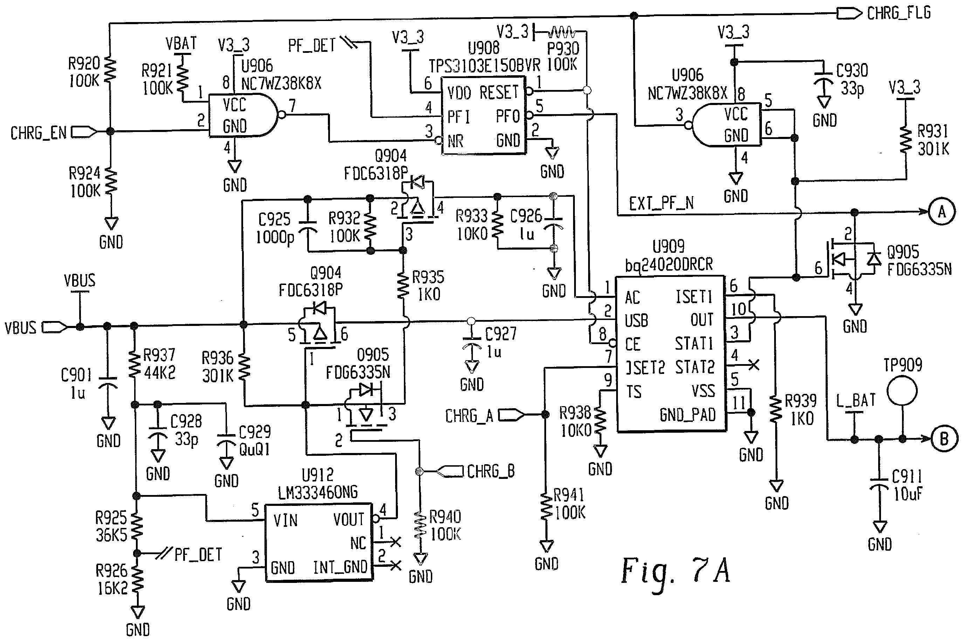

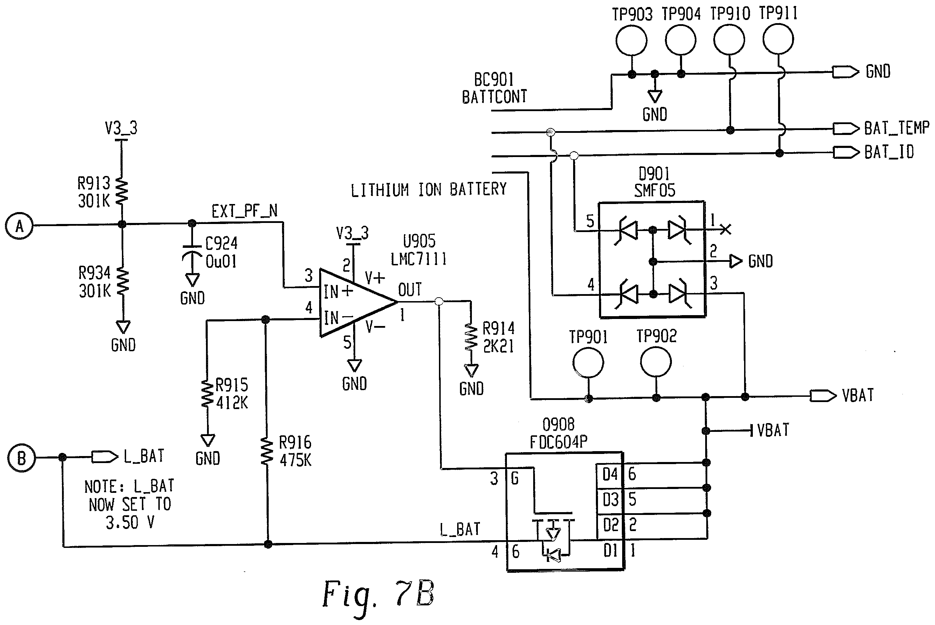

The design presented in **Figures 7A** through **7C** uses the same basic circuitry as in **Figure 6****,** but adds several elements which provide further advantages. These advantages include the following:
- the battery can be charged with an input voltage being just above the battery level;
- the start-up of the portable device **18** when battery is dead or not present, is different from that of **Figure 6****;**
- the handling of input glitches from the external power supply is improved; and
- contrary to the instructions of the manufacturer of the battery charge controller used in this implementation, the VCC and IN pins are fed separately, to avoid back voltage leakage and potential latch-up problems in the battery charge controller.

The specific design parameters for this embodiment of the invention can be summarized as follows:
1. constant current, constant voltage charging capabilities (as required for charging of Lithium Ion batteries);
2. current selection for 100mA, 500mA and 750mA power supplies;
3. operation of the portable device **18** when the rechargeable battery **24** is low, dead, or not present;
4. start-up and operation of the portable device **18** within less than 100mS, in the cases the battery **24** is not present or it is dead;
5. compliance with USB suspend mode of operation (system should draw less than 500uA);
6. over voltage protection above 5.8V up to minimum of 10V;
7. protection against a short circuit on the battery connector;
8. allow charging with the input voltage as low as the portable device **18** needs for its safe operation;
9. voltage in the range of 3.3V - 3.6V for pull-up resistor on D+ line;
10. provide means to connect and disconnect the voltage to pull-up resistor on D+ line;
11. battery presence indication; and
12. providing status of the battery charge controller.

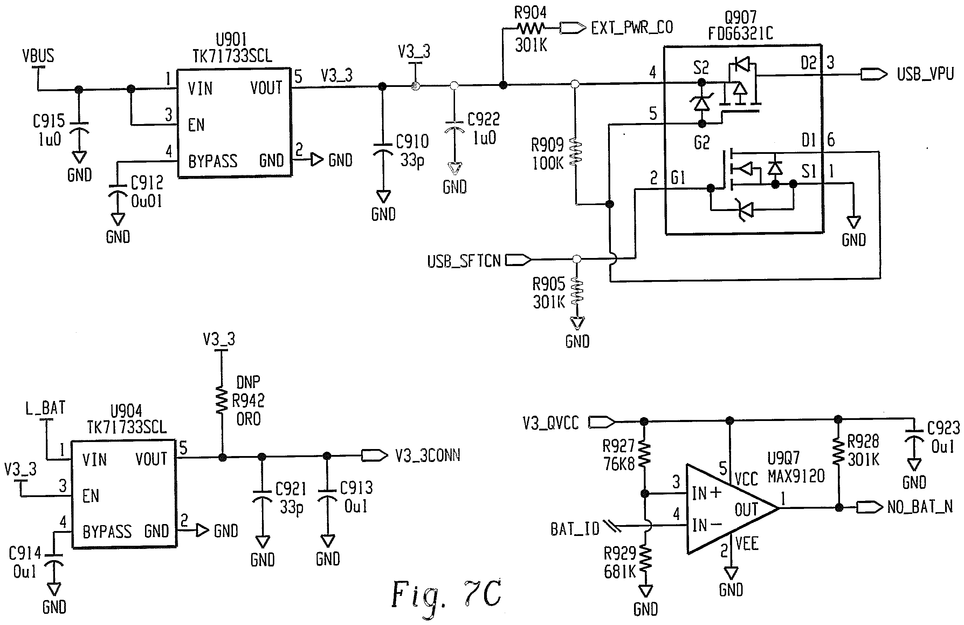

The general description of this comprehensive implementation of the invention follows:
The circuit of **Figures 7A - 7C** centres around a Texas Instruments bq24020 Lithium Ion battery charge controller, labelled as **U909** in **Figure 7C****.** This battery charge controller provides the constant current and constant voltage modes required to charge Lithium Ion cells, and supports externally programmable current limits. Its UVLO (under voltage lock-out threshold) is provided by the PFI/PFO (**U908**) comparator (Texas Instruments TPS3103E15) with reference, and its threshold is set by the resistor dividers of the VBUS input. **U908** is also used to guarantee initial start-up operation of **U909** with minimum of 100mS. This provides means to enumerate when operating with low/dead or without battery. Overvoltage protection (OVP) is provided by the **U912** which is set to -5.8V. Charging status is provided by the battery charge controller **U909,** which indicates whether or not the controller is delivering current to the system. Voltage for the D+ pull-up resistor is provided by **U901** (a low voltage dropout regulator, Toko TK71733SCL) and its switching capability via **Q907.** The same voltage is also used to power-up the components that are used only when the external power is available via VBUS **(U906, U905,** etc).

A comparator **U905** (LMC7111A) and a MOSFET **Q908** are used to boost the system voltage when operating with low/dead battery or without the battery. This closed loop also "throttles" current to the system under no battery, and low battery conditions. This occurs because when the L_BAT voltage drops (due to the system load) **U905** acts to turn off **Q908,** directing more current to the system (away from battery).

Comparator **U907** provides the battery presence status indicator.

Battery connector short circuit protection is NAND'ed **(U906)** with the charger enable functionality, thus automatically disabling the battery charge controller **U909** when a short is present. The battery charge controller **U909** automatically re-starts the charge if the battery voltage falls below an internal threshold, and automatically enters sleep mode when VCC supply is removed.

### Theory of Operation

Note that the inputs and outputs of the circuit in **Figures 7A** - **7C** can be summarized as follows:

| Signal | Connection | Description |
|---|---|---|
| VBUS | To Power source (USB or charger) | Power input to the device, used for battery charging or device operation |
| CHRG_EN | System Control Signal | enables/disables charger and current delivery to the system; Reset State: HIZ (pull-down resistor makes RST = LOW, charger is OFF) |
| CHRG_A | System Control Signal | enables 450mA current limit for the charger; reset state: LOW |
| CHRG_B | System Control Signal | enables 750mA current limit for the charger; reset state: LOW |
| USB_CD | System Control Signal | goes HIGH every time the VBUS is above ∼2.1V |
| CHRG_FLG | System Control Signal | charger status flag; reset state: LOW |
| VBAT | To rechargeable battery | main power source for the rechargeable battery, reset state: battery voltage value |
| L_BAT | To portable device | provides system power, reset state: battery voltage level |

VBUS, the input voltage, is presented via **Q904a** to the USB input pin of the battery charge controller **U909. Q904** is used for OVP and is controlled by U912 (3.0V under voltage detector, National Semiconductor LMS33460) whose input voltage is provided via resistor divider **R937** and **R925** + **R926.** Its open drain output keeps **Q904** in saturation while VBUS / **(R937** + **R925** + **R926)** * **(R925** + **R926)** < 3.0V, which provides OVP above -5.8V.

While USB input to the battery charge controller **U909** is present, 100mA and 500mA current limit could be selected via CHRG_B (CHRG_B = LOW provides 100mA, and CHRG_B = HIGH provides 500mA). Resistor **R941** sets default LOW logic level to the ISET2 input of **U909,** thus allowing a 100mA default current limit. This is important as it makes the system compliant with the USB specification when operating with low/dead or without battery. A USB device is limited to 100mA operation, until the device enumerates to 500mA (if the host USB supports this).

Resistor **R940** provides a default LOW input level to the gate of **Q905a,** which keeps it out of saturation (OFF) while in reset mode and therefore sets the gate voltage of **Q904b** at its source level (at the level of VBUS voltage) which disallows the VBUS presence at AC input of the battery charge controller **U909** controller. Resistors **R932** and **R936** are pull-up resistors for **Q904**.

Charging current of 750mA (used for non-USB power sources) could be selected by setting CHRG_A = HIGH, which sets **Q905a** in saturation (ON) and in turn puts **Q904b** in saturation (ON) as well, presenting VBUS voltage at AC input of the battery charge controller **U909**. As an AC input to **U909** provides override over the USB input (if voltage on the AC input exceeds 1.5V charging input-output path is defaulted to AC input) charging current is now programmed by the value of **R939** resistor.

Capacitor **C925** is used to prevent **Q904b** from conducting because of its gate-to-drain parasitic (gate-to-drain capacitance would charge the gate, if pulled up to its source, at RC time) capacitance during the fast transient responses of VBUS voltage, and allows the gate to rapidly charge at the VBUS level keeping the **Q904b** in saturation. Resistor **R935** is used to limit the discharge current of **C925** so that **Q905a** does not exceed its specified limits. **R933** is a pull-down resistor that prevents an AC input to the battery charge controller **U909** from floating. **C926** and **C927** are input bypass capacitors. It is important to keep the total input capacitance below 10uF to comply with the USB inrush current specification.

The total current that the system draws from VBUS, should not exceed 500uA when in suspend mode. This is mainly accomplished by the very low operating current of the battery charge controller **U909** (typically < 100uA) in the OFF mode of operation. **Q905b** is used to disable the LBAT voltage booster when the battery charge controller **U909** is not delivering any current to the battery **24** and/or portable device **18.** It does this by shorting the positive input of the **U905** which makes its output to drive **Q908** into saturation (ON).

**U906b** is used as an inverter of the CHRG_FLG flag, simply to make it compatible with the software and hardware the rest of the system. **R931** is a pull-up resistor for CHRG_FLG open drain output.

Processor supervisor **U908** has dual functionality. Its PFI (power fail input) input level is set by the resistor divider **R937 + R925** and **R926** so it matches the **U908** internal reference when VBUS drops down to 3.3V (or the value of LBAT voltage set by the **U905** and **Q908** when operating with low/dead or without battery), causing its open drain output (power fail output - PFO) to go to GND. This would force the positive input node of **U905** to go to GND and put **Q908** in saturation (ON). This set of circuitry creates an Under Voltage Lock Out (UVLO) threshold for the L_BAT boost circuit. This is important as the **U909** can operate down to 2.5V, causing its status flag to indicate current delivery to the system even though it really does not (the battery **24** internally disconnects below 2.5V). Such a condition would cause the system to reset (for battery voltage levels lower than the preset minimum LBAT value) as the **U905/Q908** would try to keep the LBAT voltage, at the preset value, by disconnecting the battery **24** and thinking that the battery charge controller **U909** is delivering enough current.

The second functionality of **U908** is the start-up override on the **U909-**CE input pin, which provides power to the system for a minimum of 100mS to initiate and properly enumerate on the USB-BUS. This is accomplished by the keeping its RESET open drain output at GND before the VBUS reaches 2.5V and than 100mS after. This keeps the battery charge controller **U909** enabled during that time.

**U906a** provides NAND'ed functionality of CHRG_EN and presence of the short on the battery connector. A shorted battery disables the battery charge controller **U909** in hardware. By having the voltage on the VBAT, CHRG_EN control line could enable or disable the battery charge controller **U909** (CHRG_EN=HIGH would enable the battery charge controller **U909** by pulling low the MR input pin of **U908**). **R921** provides isolation from the battery and input of **U906a** so that the current drain is limited to maximum of 42uA even though the **U906** creates HIZ (high impedance) inputs and outputs when power is not present at its VCC.

**R924** provides default LOW input level for **U906a** during the host processor reset. **R920** is pull-up resistor for CHRG_FLG making it valid only during the time the battery charge controller **U909** is enabled.

**U907** produces battery presence indicator by monitoring BAT_ID input from the battery pack. Its output would be at HIGH logic level any time the BAT_ID resistor is present and its pull-up is provided by BAT_CHK signal.

Low drop out voltage regulator **U901** (TOKO TK71733SCL) provides a regulated 3.3V supply for the USB data line pull up resistors, as well as a 3.3V supply for various components in the charger circuit and as an indicator that an external source is attached (EXT_PWR_CD). **U901** has reverse bias and overcurrent protection, built-in thermal shutdown and short circuit protection.

**U901** provides power for **U906, U908,** and **U905** as well as the 3.3V voltage for pull-up resistor. It is also used to provide the indication of VBUS presence to the system (EXT_PWR_CD). **R904** is used to limit the current to the input pin of the system. **C915** is input bypass capacitor and **C922** is output filtering capacitor. **C910** is used to filter RF noise coming from the RF circuitry, and **C912** is bypass capacitor for internal reference.

**Q907** is used to switch USB_VPU voltage and allow soft enumeration on the USB bus. **R909** provides default OFF condition for P-FET and **R905** provides fast discharge of the USB_SFTCN control line (during the RST or suspend initiation without battery presence).

**U904** provides supply voltage for USB transceiver chip (it is a standard voltage regulator as known in the art). It is enabled when VBUS is present and automatically shuts down the power when VBUS goes OFF. **C921** and **C913** are output filter capacitors. **U904** can optionally be removed to save cost; **R942** should then be populated to supply power to the USB transceiver chip. **U904** should only be required if the transceiver chip does not meet USB suspend current requirements (and our device can wake-up from suspend by looking at only D+/D- line responses).

**U905** and **Q908** are mainly used to maintain L_BAT = VBAT, when VBUS is not present, and to keep L_BAT to at least 3.6V when VBUS is present (while charger is delivering current to the system) and battery voltage is less than 3.6V. It is also used to split total power dissipation into two (between the battery charge controller's main pass element and **Q908**) to allow for higher charging currents at all battery voltage levels.

Another important functionality of this circuitry is to allow proper USB enumeration when battery is low/dead or not present, by allowing the system to the wake up within 15mS when battery not present, or dead. Once the **U909** delivers the whole programmed current, **U905/Q908** will maintain the minimum preprogrammed voltage at L_BAT (3.5V in our case) by varying the drain-to-source resistance of **Q908.**

**U905's** positive input is used as a reference and is set by **R934** and **R913. C924** allows a slow ramp-up of LBAT so that the battery charge controller **U909** can deliver full programmed current until **Q908** requests voltage increase on L_BAT (if needed). Resistor dividers **R916** and **R915** are used to set the "minimum voltage" at L_BAT, while the **R914** provides a pull-down resistor for the gate of **Q908.**

**U907** provides the system with indication of battery presence. **R927** and **R929** are used to set the reference and **R928** is pull-up resistor to open drain output of **U907.** BAT_ID is than presented to its negative input and NO_BAT_N is set accordingly.

The preferred values for the components in this circuit are as shown in **Figures 7A - 7C****.** These values will, of course, vary with the application and design parameters.

### Software Embodiments

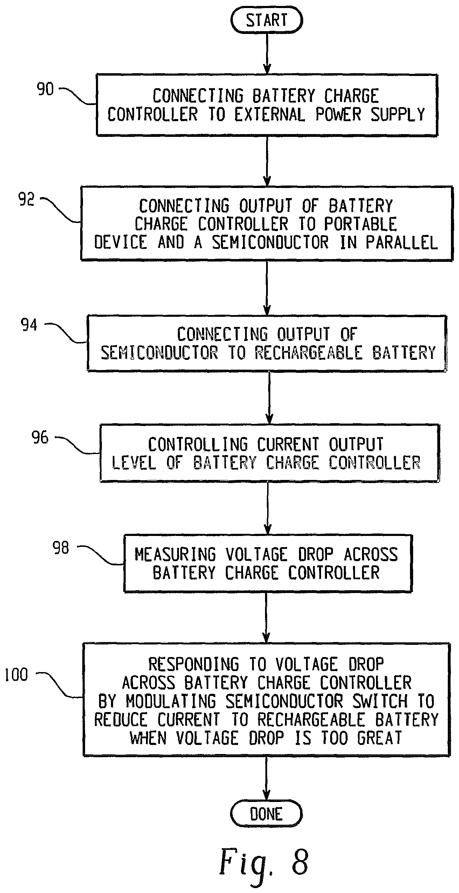

Rather than using only electronic hardware as shown above, the invention may also be implemented using a combination a hardware and software components, including programmable devices such as digital signal processors (DSPs), microcontrollers, field programmable gate arrays (FPGAs), application specific integrated circuits (ASICs) and the like. Such an embodiment could be implemented as shown in the flow chart of **Figure 8****.**

Like the embodiments described above, this method could be used to charge any rechargeable battery in a portable or similar electronic device. Any external power supply could be used, though the invention is most useful with power supplies of limited capacity.

As shown in **Figure 8****,** the method of the invention begins at step **90** by connecting the input of a battery charge controller **20** to the external power supply, preferably via a USB cable and connectors **16,** and a cradle **10** to hold the portable device **18.** The output of the battery charge controller **20** is connected in parallel, to the portable device **18** and the input of the semiconductor switch **Q1,** per step **92,** and the output of said semiconductor switch **Q1** is connected to the rechargeable battery **24** per step **94.**

Next, the current output of the battery charge controller **20** is controlled in some manner, at step **96.** As noted above this may be done in many ways, for example, a DAC (digital to analogue converter) output of a micro-controller could be used to send an appropriate signal to the current control input of the battery charge controller **20.**

The voltage drop across the battery charge controller **20** is then measured at step **98.** This task could also be performed in many ways. For example, many microcontrollers provided with integral ADCs (analogue to digital converters) which could be used to perform this function.

Because the current is controlled at step **96,** and the voltage drop across the battery charge controller **20** is measured at step **98,** this methodology can deduce what the power dissipation is for the battery charge controller **20.** The method of the invention is therefore able to control the power dissipation by modulating the semiconductor switch **Q1** in response to the voltage drop across the battery charge controller **20** at step **100,** reducing the quantity of current supplied to the rechargeable battery **24** when the voltage drop is too great.

In this way, the total power dissipated by the battery charge controller **20** is controlled; the portable device **18** receiving the power it needs to operate and the rechargeable battery **24** receiving any additional available power.

The balance of the software code needed to perform this algorithm would be straightforward to one skilled in the art.

The method steps of the invention may be embodiment in sets of executable machine code stored in a variety of formats such as object code or source code, integrated with the code of other programs, implemented as subroutines, by external program calls or by other techniques as known in the art.

Even the hardware embodiments of the invention could be encoded in a software form such as the hardware development languages (HDL code) used to fabricate integrated circuits. This HDL or similar code could be stored on any electronic memory means such computer diskettes, CD-Roms, Random Access Memory (RAM) and Read Only Memory (ROM). As well, electronic signals representing this software code may also be transmitted via a communication network.

### Options and Alternatives

While particular embodiments of the present invention have been shown and described, it is clear that changes and modifications may be made to such embodiments without departing from the true scope of the invention as defined by the appended claims. For example:
1. the circuit of the invention could be used with any manner of power source delivering USB power,
2. any manner of electrical appliance could be charged with such a circuit including portable laptop computers, personal digital assistants (PDAs), cellular telephones, wireless email and paging devices; and
3. any manner of rechargeable battery could be used including single or multiple lithium-ion, nickel-cadmium, or other types of cells.

Again, such implementations would be clear to one skilled in the art from the teachings herein, and do not take away from the invention.

### INDUSTRIAL APPLICABILITY

The present invention provides a portable electronic device and a method for controlling a USB power supply to a rechargeable battery and one or more portable device components.

## Claims

1. A portable electronic device, comprising:
a rechargeable battery (24);
a controller (20, 50 + Q2, U909) configured to receive USB power from an external source and supply power to the rechargeable battery and one or more portable device components, the portable electronic device comprising the one or more portable device components; and
a switch (Q1, Q3, Q908) configured to isolate the rechargeable battery from the one or more portable device components and control a supply of power to the rechargeable battery;
a sensing circuit (30) configured to compare a reflected system voltage level with a reference voltage level, the reflected system voltage level reflecting a system voltage level of the power supplied to the one or more portable device components, the sensing circuit configured to control the switch to limit battery charging from the external source such that:
power is configured to be supplied from the battery to the one or more portable device components via the switch when the supply power is not available, wherein the reflected system voltage level also reflects the voltage level of the rechargeable battery;
power is configured to be supplied from the supply power to the battery via the switch and to the one or more portable device components when the supply power is available, wherein the sensing circuit maintains the reflected system voltage level to be at least a minimum system voltage level required for operation of the one or more portable device components by modulating the switch.

2. The portable electronic device of claim 1, wherein a sufficient power is provided to meet the dynamic needs of the one or more portable device components and a battery charge power is provided to the rechargeable battery, the battery charge power being a remainder of the supply power.

3. The portable electronic device of claim 1, wherein the supply of power is limited by limiting current.

4. The portable electronic device of claim 1, wherein the supply of power is limited by limiting voltage.

5. The portable electronic device of claim 1, wherein total power consumed by the device is provided by the USB source.

6. The portable electronic device of claim 1, wherein the controller (50 + Q2) comprises a driving semiconductor (Q2) configured to: carry supply current to the one or more portable device components and the switch and limit the supply power such that the one or more portable device components and the rechargeable battery may not draw more than a limiting current.

7. The portable electronic device of claim 1, wherein the reference voltage level is the minimum system voltage level and the voltage sensing circuit is further configured to:
respond to the reflected system voltage signal being less than the reference voltage level by reducing a current flow through the switch.

8. The portable electronic device of claim 3, wherein the controller is further configured to: receive the USB power from either an external universal serial bus (USB) source or a non-USB source; and set the limiting current based on the USB power being from the non-USB source.

9. The portable electronic device of any one of claims 1-8 including a graphical user interface and an interface for communicating with a communications network.

10. The portable electronic device of claim 9, wherein the sensing circuit is configured to control the switch in response to a voltage drop across the controller.

11. A method for controlling a USB power supply to a rechargeable battery and one or more portable device components, comprising the steps of:
isolating the rechargeable battery from the one or more portable device components by a switch;
receiving the USB power from an external source;
supplying power to the rechargeable battery via the switch and to the one or more portable device components;
comparing a reflected system voltage level with a reference voltage level, the reflected system voltage level reflecting a system voltage level of the power supplied to the one or more portable device components;
controlling the switch to limit battery charging from the external source responsive to the comparison;
supplying power from the battery to the one or more portable device components via the switch when the supply power is not available, wherein the reflected system voltage level also reflects the voltage level of the rechargeable battery;
supplying power from the supply power to the battery via the switch and to the one or more portable device components when the supply power is available, and maintaining the reflected system voltage level to be at least a minimum system voltage level required for operation of the one or more portable device components by modulating the switch.

12. The method of claim 11 further comprising supplying current to the one or more portable device components and the switch and limiting the supply power such that the one or more portable device components and the rechargeable battery may not draw more than a limiting current.

13. The method of claim 12, wherein total power consumed by the device is provided by the USB source.

14. The method of claim 11, wherein the rechargeable battery is associated with a portable electronic device.

## Patentansprüche

1. Tragbare elektronische Vorrichtung mit:
einer aufladbaren Batterie (24),
einer Steuerung (20, 50 + Q2, U909), die konfiguriert ist, um von einer externen Quelle USB-Leistung zu empfangen und der aufladbaren Batterie und mindestens einer tragbaren Vorrichtungskomponente Leistung zuzuführen, wobei die tragbare elektronische Vorrichtung die mindestens eine tragbare Vorrichtungskomponente aufweist, und
einem Schalter (Q1, Q3, Q908), der konfiguriert ist, um die aufladbare Batterie von der mindestens einen tragbaren Vorrichtungskomponente zu isolieren und eine Zufuhr von Leistung an die aufladbare Batterie zu steuern,
einer Abtastschaltung (30), die ausgebildet ist, einen wiedergegebenen Systemspannungspegel mit einem Referenzspannungspegel zu vergleichen, wobei der wiedergegebene Systemspannungspegel einen Systemspannungspegel der der mindestens einen tragbaren Vorrichtungskomponente zugeführten Leistung wiedergibt, wobei die Abtastschaltung konfiguriert ist, um den Schalter zu steuern, um die Batterieladung durch die externe Quelle so zu begrenzen, dass:
Leistung konfiguriert ist, um der mindestens einen tragbaren Vorrichtungskomponente von der Batterie über den Schalter zugeführt zu werden, wenn keine Versorgungsleistung verfügbar ist, wobei der wiedergegebene Systemspannungspegel auch den Spannungspegel der aufladbaren Batterie wiedergibt,
Leistung konfiguriert ist, um der Batterie und der mindestens einen tragbaren Vorrichtungskomponente von der Versorgungsleistung über den Schalter zugeführt zu werden, wenn die Versorgungsleistung verfügbar ist, wobei die Abtastschaltung den wiedergegebenen Systemspannungspegel durch Verstellen des Schalters auf einem Mindestsystemspannungspegel hält, der für den Betrieb der mindestens einen tragbaren Vorrichtungskomponente nötig ist.

2. Tragbare elektronische Vorrichtung nach Anspruch 1, wobei eine ausreichende Leistung bereitgestellt wird, um die dynamischen Erfordernisse der mindestens einen tragbaren Vorrichtungskomponente zu erfüllen, und der aufladbaren Batterie eine Batterieladeleistung bereitzustellen, wobei die Batterieladeleistung ein Rest der Stromversorgung ist.

3. Tragbare elektronische Vorrichtung nach Anspruch 1, wobei die Leistungszufuhr durch Begrenzen des Stroms begrenzt wird.

4. Tragbare elektronische Vorrichtung nach Anspruch 1, wobei die Leistungszufuhr durch Begrenzen der Spannung begrenzt wird.

5. Tragbare elektronische Vorrichtung nach Anspruch 1, wobei die von der Vorrichtung verbrauchte Gesamtleistung von der USB-Quelle bereitgestellt wird.

6. Tragbare elektronische Vorrichtung nach Anspruch 1, wobei die Steuerung (50 + Q2) einen Antriebshalbleiter (Q2) aufweist, der konfiguriert ist, um der mindestens einen tragbaren Vorrichtungskomponente und dem Schalter Versorgungsstrom zuzuführen und die Versorgungsleistung so zu begrenzen, dass die mindestens eine tragbare Vorrichtungskomponente und die aufladbare Batterie höchstens einen Begrenzungsstrom beziehen.

7. Tragbare elektronische Vorrichtung nach Anspruch 1, wobei der Referenzspannungspegel der Mindestsystemspannungspegel ist und die Spannungsabtastschaltung ferner konfiguriert ist, um auf das wiedergegebene Systemspannungssignal, das unter dem Referenzspannungspegel liegt, zu antworten, indem ein durch den Schalter fließender Strom verringert wird.

8. Tragbare elektronische Vorrichtung nach Anspruch 3, wobei die Steuerung ferner konfiguriert ist, um die USB-Leistung entweder von einer externen USB, universal serial bus,-Quelle oder einer nicht-USB-Quelle zu empfangen und den Begrenzungsstrom auf Basis der von der nicht-USB-Quelle stammenden USB-Leistung zu bestimmen.

9. Tragbare elektronische Vorrichtung nach einem der Ansprüche 1 bis 8 mit einer graphischen Bedienoberfläche und einer Schnittstelle zur Verbindung mit einem Kommunikationsnetzwerk.

10. Tragbare elektronische Vorrichtung nach Anspruch 9, wobei die Abtastschaltung konfiguriert ist, um den Schalter als Antwort auf einen Spannungsabfall an der Steuerung zu steuern.

11. Verfahren zum Steuern einer USB-Leistungszufuhr an eine aufladbare Batterie und mindestens eine tragbare Vorrichtungskomponente, mit den folgenden Schritten:
Isolieren der aufladbaren Batterie von der mindestens einen tragbaren Vorrichtungskomponente durch einen Schalter,
Empfangen der USB-Leistung von einer externen Quelle,
Zuführen von Leistung an die aufladbare Batterie über den Schalter und an die mindestens eine tragbare Vorrichtungskomponente,
Vergleichen eines wiedergegebenen Systemspannungspegels mit einem Referenzspannungspegel, wobei der wiedergegebene Systemspannungspegel einen Systemspannungspegel der der mindestens einen tragbaren Vorrichtungskomponente zugeführten Leistung wiedergibt,
Steuern des Schalters, um die Batterieaufladung durch die externe Quelle basierend auf dem Vergleich zu begrenzen,
Zuführen von Leistung von der Batterie an die mindestens eine tragbare Vorrichtungskomponente über den Schalter, wenn keine Versorgungsleistung verfügbar ist, wobei der wiedergegebene Systemspannungspegel auch den Spannungspegel der aufladbaren Batterie wiedergibt,
Zuführen von Leistung von der Versorgungsleistung an die Batterie über den Schalter und an die mindestens eine tragbare Versorgungskomponente, wenn Versorgungsleistung verfügbar ist, und Beibehalten des wiedergegebenen Systemspannungspegels auf mindestens einem Mindestsystemspannungspegel, der zum Betrieb der mindestens einen tragbaren Vorrichtungskomponente nötig ist, durch Verstellen des Schalters.

12. Verfahren nach Anspruch 11, ferner mit den Schritten des Zuführens von Strom an die mindestens eine tragbare Vorrichtungskomponente und den Schalter und des Begrenzens der Versorgungsleistung, so dass die mindestens eine tragbare Vorrichtungskomponente und die aufladbare Batterie nicht mehr als den Begrenzungsstrom aufnehmen können.

13. Verfahren nach Anspruch 12, wobei die von der Vorrichtung verbrauchte Gesamtleistung von der USB-Quelle geliefert wird.

14. Verfahren nach Anspruch 11, wobei die aufladbare Batterie zu einer tragbaren elektronischen Vorrichtung gehört.

## Revendications

1. Dispositif électronique portable, comprenant :
une pile rechargeable (24) ;
un régulateur (20, 50 + Q2, U909) configuré pour recevoir de l'énergie USB depuis une source externe et fournir de l'énergie à la pile rechargeable et à un ou plusieurs composants de dispositif portable, le dispositif électronique portable comprenant les un ou plusieurs composants de dispositif portable ; et
un commutateur (Q1, Q3, Q908) configuré pour isoler la pile rechargeable par rapport aux un ou plusieurs composants de dispositif portable et réguler une fourniture d'énergie à la pile rechargeable ;
un circuit de détection (30) configuré pour comparer un niveau de tension système reflété à un niveau de tension de référence, le niveau de tension système reflété reflétant un niveau de tension système de l'énergie fournie aux un ou plusieurs composants de dispositif portable, le circuit de détection étant configuré pour commander au commutateur de limiter un chargement de la pile depuis la source externe de telle sorte que :
de l'énergie est configurée pour être fournie depuis la pile aux un ou plusieurs composants de dispositif portable via le commutateur lorsque l'énergie d'alimentation n'est pas disponible, dans lequel le niveau de tension système reflété reflète également le niveau de tension de la pile rechargeable ;
de l'énergie est configurée pour être fournie depuis l'énergie d'alimentation à la pile via le commutateur et aux un ou plusieurs composants de dispositif portable lorsque l'énergie d'alimentation est disponible, dans lequel le circuit de détection maintient le niveau de tension système reflété de sorte qu'il corresponde au moins à un niveau de tension système minimale requis pour le fonctionnement des un ou plusieurs composants de dispositif portable en modulant le commutateur.

2. Dispositif électronique portable selon la revendication 1, dans lequel une énergie suffisante est fournie pour répondre aux besoins dynamiques des un ou plusieurs composants de dispositif portable et une énergie de charge de pile est fournie à la pile rechargeable, l'énergie de charge de pile étant un résidu de l'énergie d'alimentation.

3. Dispositif électronique portable selon la revendication 1, dans lequel la fourniture d'énergie est limitée par un courant de limitation.

4. Dispositif électronique portable selon la revendication 1, dans lequel la fourniture d'énergie est limitée par une tension de limitation.

5. Dispositif électronique portable selon la revendication 1, dans lequel l'énergie totale consommée par le dispositif est fournie par la source USB.

6. Dispositif électronique portable selon la revendication 1, dans lequel le régulateur (50 + Q2) comprend un semi-conducteur d'entraînement (Q2) configuré pour :
transporter un courant d'alimentation jusqu'aux un ou plusieurs composants de dispositif portable et au commutateur et limiter l'énergie d'alimentation de telle sorte que le un ou plusieurs composants de dispositif portable et la pile rechargeable ne puissent pas soutirer plus qu'un courant de limitation.

7. Dispositif électronique portable selon la revendication 1, dans lequel le niveau de tension de référence est égal au niveau de tension système minimale et le circuit de détection de tension est configuré en outre pour :
répondre au fait que le signal de tension système reflété est inférieur au niveau de tension de référence en réduisant un écoulement de courant à travers le commutateur.

8. Dispositif électronique portable selon la revendication 3, dans lequel le régulateur est configuré en outre pour : recevoir l'énergie USB depuis soit une source de bus série universel (USB) externe, soit une source non USB ; et définir le courant de limitation sur la base du fait que l'énergie USB provient de la source non USB.

9. Dispositif électronique portable selon l'une quelconque des revendications 1 à 8 incluant une interface utilisateur graphique et une interface pour communiquer avec un réseau de communications.

10. Dispositif électronique portable selon la revendication 9, dans lequel le circuit de détection est configuré pour commander le commutateur en réponse à une chute de tension à travers le régulateur.

11. Procédé de régulation d'une fourniture d'énergie USB à une pile rechargeable et à un ou plusieurs composants de dispositif portable, comprenant les étapes consistant à :
isoler la pile rechargeable par rapport aux un ou plusieurs composants de dispositif portable par un commutateur ;
recevoir l'énergie USB depuis une source externe ;
fournir l'énergie à la pile rechargeable via le commutateur et aux un ou plusieurs composants de dispositif portable ;
comparer un niveau de tension système reflété à un niveau de tension de référence, le niveau de tension système reflété reflétant un niveau de tension système de l'énergie fournie aux un ou plusieurs composants de dispositif portable ;
commander au commutateur de limiter le chargement de la pile depuis la source externe en réponse à la comparaison ;
fournir de l'énergie depuis la pile aux un ou plusieurs composants de dispositif portable via le commutateur lorsque l'énergie d'alimentation n'est pas disponible, dans lequel le niveau de tension système reflété reflète également le niveau de tension de la pile rechargeable ;
fournir de l'énergie depuis l'énergie d'alimentation à la pile via le commutateur et aux un ou plusieurs composants de dispositif portable lorsque l'énergie d'alimentation est disponible, et maintenir le niveau de tension système reflété de sorte qu'il corresponde au moins à un niveau de tension système minimale requis pour le fonctionnement des un ou plusieurs composants de dispositif portable en modulant le commutateur.

12. Procédé selon la revendication 11, comprenant en outre la fourniture de courant aux un ou plusieurs composants de dispositif portable et au commutateur et limiter l'énergie d'alimentation de telle sorte que les un ou plusieurs composants de dispositif portable et la pile rechargeable ne puissent pas soutirer plus qu'un courant de limitation.

13. Procédé selon la revendication 12, dans lequel l'énergie totale consommée par le dispositif est fournie par la source USB.

14. Procédé selon la revendication 11, dans lequel la pile rechargeable est associée à un dispositif électronique portable.
